# EUROPEAN PATENT APPLICATION

(11) **EP 2 299 607 A2**
(43) Date of publication of application: **23.03.2011**
(21) Application number: 10177679.7
(22) Date of filing: 20.09.2010
(51) Int. Cl.: H04B 7/06

(54) **Multicarrier transmit diversity in UTRAN for HSPA**

(30) Priority: 18.09.2009 ES 200930703
(71) Applicant: Vodafone Group PLC, Newbury Berkshire RG14 2FN (GB); Vodafone España, S.A.U., 28108 Alcobendas (ES)
(72) Inventor: Diaz Mateos, Maria, 28050 Madrid (ES); Le Pezennec, Yannick, E-28050 Madrid (ES); Dominguez Romero, Francisco, E-28050 Madrid (ES)
(74) Representative: Keston, David Arthur

(57) **Abstract**

Multicarrier transmit diversity in UTRAN for HSPA, comprising a baseband unit and a remote radio unit of a Node B configured for receiving a data stream from an RNC and subsequently generating N encoded data streams and corresponding RF output signals for downlink transmission over N antennas; wherein the remote radio unit transmits the N (preferably two) RF output signals using transmission diversity over different carrier frequencies. The remote radio unit can transmit each STTD encoded data stream over different frequency carriers or transmit one STTD encoded data stream over a frequency carrier at frequency f1 and the second STTD encoded data stream over a different frequency carrier, at frequency f2. The baseband unit can also transmit, using MIMO baseband processing, the N MIMO data streams over different frequency carriers.

## Description

### Field of the Invention

The present invention is comprised within the field of mobile telecommunications, and more specifically in a multicarrier transmit diversity UTRAN HSPA system.

### Background of the Invention

Due to the traffic growth, especially in terms of packet switched data traffic, and the limited power available in each Node B, more and more features to maximize the power efficiency as well as data rate coverage are needed in HSPA networks.

In the current HSPA networks, a number of transmit diversity features are available to improve HSPA performance. In particular open loop transmit diversity (space-time transmit diversity) is available for common channels, dedicated channels (e.g. for speech) and as well as HSDPA. This transmit diversity is used with a different encoding in every transmission branch and using the same carrier, i.e. a form of space-time transmission diversity. One of the key aspect of this feature is that being applicable to all channels (except MIMO) it is an efficient technique to balance the power between the two power amplifiers e.g. when introducing MIMO in an HSPA network.

Capacity and coverage requirements make operators deploy multiple carriers within the same band or carriers in different bands. In order to efficiently exploit radio network resources multicarrier data transmission to users is required to be able to flexibly allocate all spectrum resources to a single user when available. As for classical (i.e. conventional) single carrier mode the use of transmit diversity and MIMO techniques is available in multicarrier mode in HSPA networks (example: upgrade to multicarrier on MIMO/Tx diversity HSPA sites').

The problem is that when using MIMO and Tx diversity in multicarrier mode, the frequency Tx diversity gains are not exploited because Tx diversity and MIMO are applied separately on a per carrier basis. In other words separate streams of data are sent on each carrier.

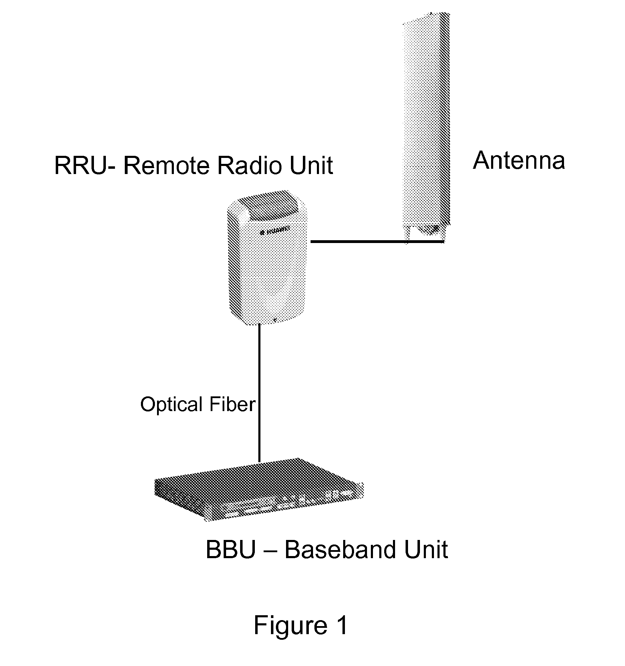

**Figure 1** shows a typical node B structure, comprising a baseband unit (BBU), a remote radio unit (RRU) and an antenna (typically a cross-polar with at least 2 transmit ports).

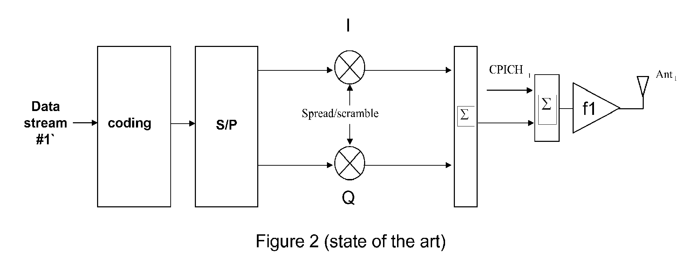

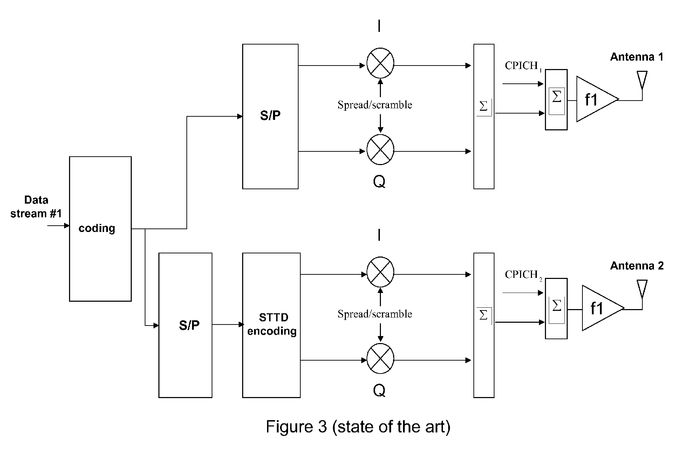

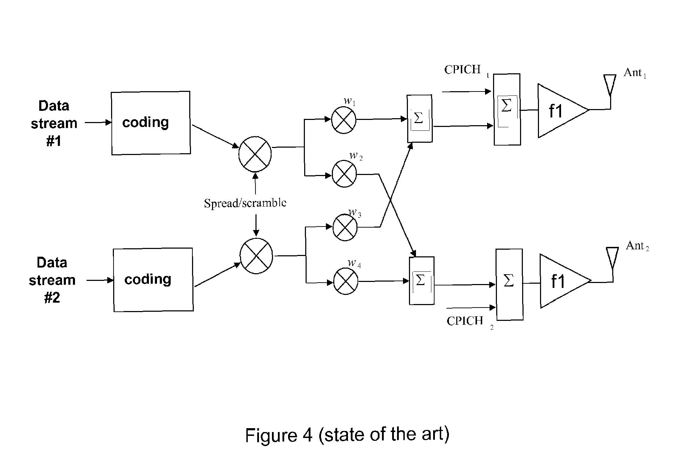

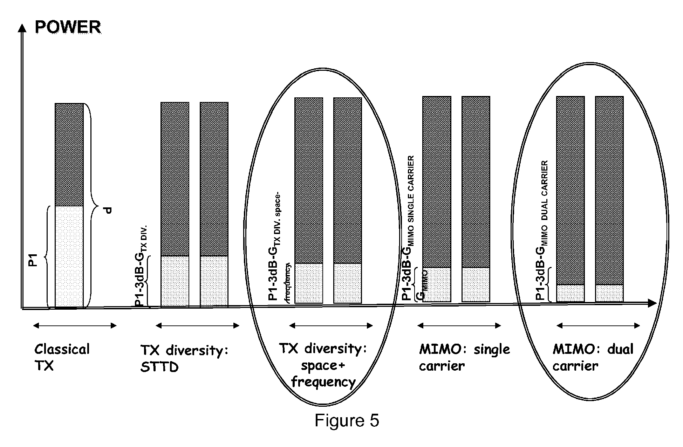

There are different multicarrier Tx diversity solutions currently available, which are included in the 3GPP standards:
(A) - Classical single antenna transmission in 3G (no diversity): with this solution, there is one single data stream sent using a single Tx antenna port in one standalone frequency (see **Figure 2****)**, so in order to achieve X Kbps throughput for a given user, a P1 power is needed in the power amplifier (see Figure 5), wherein P is the total power amplifier power.
(B) - Space Time Transmit Diversity (STTD): with this solution, there is one single data stream (data stream #1) sent using two Tx antenna ports in the same frequency (see **Figure 3**), so the power needed to achieve X Kbps for a given user, is P1-3dB-G_{TX DIV} per power amplifier (P1 is the power to get X Kbps per user in classical single antenna transmission and G_{TX DIV} is the gain of Tx diversity (STTD), as the power is split between two power amplifiers, and there is a gain due to the Tx diversity (see Figure 5).
(C) - MIMO single carrier transmission in 3G: with this solution, there are two data streams (data stream #1 and data stream #2), each of them split into 2 branches, so that one branch of each stream once assigned with the relevant phase weight can be combined in the same antenna (see **Figure 4**), so the power needed to achieve X Kbps for a given user is P1-3dB-G_{MIMO SINGLE CARRIER} (G_{MIMO SINGLE CARRIER} is the gain of the MIMO single carrier) per power amplifier, so with this solution we reduce the power consumed in order to offer to a user X Kbps (see Figure 5).

The present invention provides two solutions consisting in:
I) Multicarrier space-time transmit diversity for R99 and HSPA users.
II) Multicarrier dual stream MIMO dual carrier transmission for HSPA MIMO users.

The present invention provides the following advantages with regard to the state of the art:
- The possibility of improving capacity in the network and throughput per user without additional investment.
- Better traffic load management, as balances the data traffic between carriers and reduces amount of power required per carrier.

It is well-known that abbreviations and acronyms are frequently used in the mobile telephony field. Below is a glossary of acronyms/terms used throughout the present specification:

| | |
|---|---|
| 3GPP | The 3rd Generation Partnership Project |
| BBU | Baseband Unit |
| CPICH | Common Pilot Channel |
| DC-HSDPA | Dual Carrier-HSDPA |
| HSDPA | High Speed Downlink Packet Access |
| HSPA | High-Speed Packet Access |
| RLC | Radio Link Control |
| RRU | Remote Radio Unit |
| S/P | Serial/Parallel |
| STTD | Space Time Transmit Diversity |
| UE | User Equipment |
| UMTS | Universal Mobile Telecommunications System |
| UTRAN | UMTS Terrestrial Radio Access Network |

### Description of the Invention

In accordance with one aspect of the present invention there is provided a multicarrier transmit diversity in UTRAN for HSPA. Said multicarrier transmit diversity comprises a baseband unit and a remote radio unit of a Node B configured for receiving at least one data stream from an RNC and subsequently generating a plurality N of encoded data streams and corresponding RF output signals for downlink transmission over N antennas. The remote radio unit is configured for transmitting the N RF output signals using transmission diversity over different carrier frequencies.

The baseband unit of the Node B is preferably configured for receiving one data stream from the RNC and generating two STTD encoded data streams.

In a preferred embodiment the remote radio unit is configured for transmitting each STTD encoded data stream over M different frequency carriers.

In another preferred embodiment, the remote radio unit is configured for transmitting one STTD encoded data stream over a frequency carrier at frequency f1 and the second STTD encoded data stream over a different frequency carrier, at frequency f2.

In yet another preferred embodiment the baseband unit of the Node B is configured for receiving one data stream from the RNC and for transmitting, using MIMO baseband processing, the N MIMO data streams over M different frequency carriers. M, the number of different frequency carriers used in the transmission process, is preferably 2 (the first frequency carrier at frequency f1 and the second frequency carrier at frequency f2). N, the number of antennas and data streams used, is also preferably 2.

The multicarrier transmit diversity can further comprise the N antennas for transmitting the N RF output signals.

In accordance with a further aspect of the present invention there is provided a multicarrier receive diversity apparatus in mobile terminal for HSPA, comprising:
- a plurality of receivers, each one comprising:
   - an antenna system for obtaining an RF signal;
   - an RF front-end module;
   - demodulation means;
   - STTD decoding means;
   - an RLC module for obtaining the data stream contained in the RF signal;
such that the plurality of receivers are tuned at different frequencies.

The multicarrier receive diversity apparatus preferably comprises two RF receivers where signals are combined at RLC level.

In accordance with yet a further aspect of the present invention there is provided a mobile terminal comprising the previous multicarrier receive diversity apparatus.

In accordance with another aspect of the present invention there is provided a multicarrier MIMO mobile terminal for HSPA, comprising:
- a plurality of receivers, each one comprising:
   - an antenna system for obtaining an RF signal;
   - an RF front-end module;
   - demodulation means;
   - MIMO decoder means to demodulate the single or dual streams;
such that the plurality of receivers are tuned at M different frequencies each one.

In accordance with another aspect of the present invention there is provided a method for HSPA multicarrier transmission in UTRAN, comprising:
- receiving at a baseband unit of a Node B at least one data stream;
- obtaining a plurality N of encoded data streams;
- receiving at a remote radio unit of said Node B the N encoded data streams;
- transmitting N RF output signals;
such that the N RF output signals are transmitted using TX diversity over different frequencies.

The method preferably comprises receiving one data stream from the RNC and generating two STTD encoded data streams.

In a preferred embodiment the method comprises transmitting each STTD encoded data stream over M different frequency carriers.

In another preferred embodiment the method comprises transmitting one STTD encoded data stream over a frequency carrier at frequency f1 and the second STTD encoded data stream over a different frequency carrier, at frequency f2.

In yet another embodiment the method comprises receiving one data stream from the RNC and transmitting, using MIMO baseband processing, the N MIMO data streams over M different frequency carriers.

### Brief Description of the Drawings

A series of drawings which aid in better understanding the invention and which are expressly related with an embodiment of said invention, presented as a non-limiting example thereof, are very briefly described below.
Figure 1 shows a typical node B structure.
Figure 2 shows a 3G classical single antenna transmission (UTRAN side), with no Tx diversity.
Figure 3 shows a 3G single carrier STTD scheme (UTRAN side), with space and time diversity.
Figure 4 shows a 3G single carrier MIMO scheme (UTRAN side).
Figure 5 shows power consumption per power amplifier with different options, some according to the state of the art and some (marked inside an ellipse) according to the present invention.
Figures 6A and 6B show a 3G Multicarrier STTD scheme (Solution A1 & A2, UTRAN side), with space and time and frequency diversity - same data on all carriers.
Figure 7 shows a 3G Multicarrier MIMO transmission scheme (solution B1 UTRAN side)- same MIMO dual stream on f1 & f2.
Figure 8 shows the different multicarrier Tx diversity solutions, according to the terminal point of view.
Figure 9 shows a 3G Multicarrier STTD (solution A1, UE side) multicarrier UE operating with STTD ON - STTD configured on each carrier.
Figure 10 shows a 3G Multicarrier STTD (solution A2, UE side), multicarrier UE operating with STTD ON - STTD configured on each carrier.
Figure 11 shows 3G Multicarrier MIMO (Solution B1 and B2 - UE side), multicarrier UE operating with MIMO ON - MIMO branchs configured on each carrier.

### Description of a Preferred Embodiment of the Invention

The present invention provides two different solutions consisting in:
I) Multicarrier space-time transmit diversity for R99 and HSPA users
II) Multicarrier dual stream MIMO for HSPA MIMO users

### I) Multicarrier space-time transmit diversity for R99 and HSDPA users

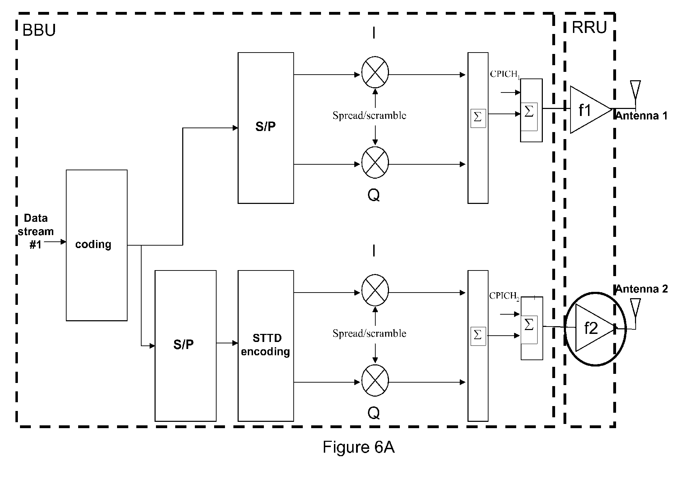

This solution (shown in **Figure 6A**) is similar to the single carrier STTD solution described above, shown in Figure 3, with the difference that instead of using the same frequency for the transmission of data on both antennas (main antenna and diversity antenna), each of the branch in the transmit diversity transmission uses a different frequency, f1 for the first branch and f2 for the second branch (the new frequency f2 marked inside a circle).

This is achieved by configuring the user in STTD transmission mode on each of the carriers used in the multicarrier transmission. The same stream of data (data stream #1) is transmitted with STTD across the carriers.

As a result, the gain of having frequency and space-time diversity is higher than the gain obtained by a space-time diversity alone (shown in Figure 3), so there is less power consumption needed or improved throughput coverage compared to case (B) above (see Figure 5).

The solution presented here does not require any change in the 3GPP standards. This solution would be supported by 3GPP Rel'8 UE onwards (requires support of multicarrier HSDPA operation as well as STTD). The solution has no impact in terms of Node B hardware and could be implemented as a software upgrade in the radio access network. This solution allows to improve HSPA performance in medium and good radio conditions on each of the carrier as due to the fact that only one Tx branch is effectively transmitted there is not intracell interference created by STTD seen from the equaliser of the UE.

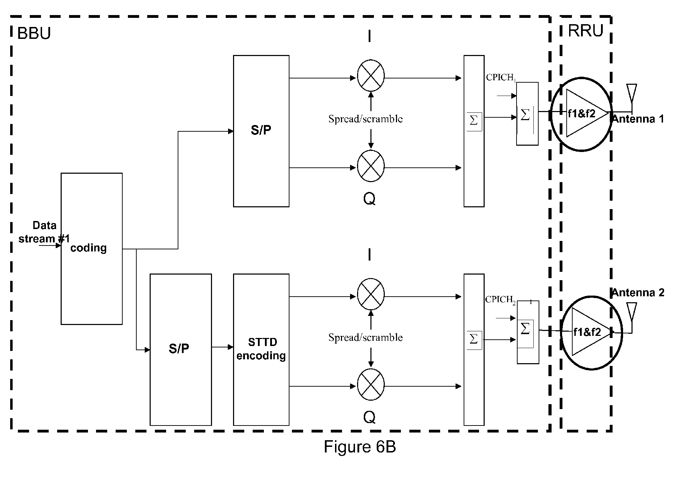

Another solution is shown in **Figure 6B**, wherein each branch is transmitted over two different frequency carriers, at frequencies f1 and f2. More than two frequency carriers could be used.

### II) Multicarrier dual stream MIMO transmission in 3G

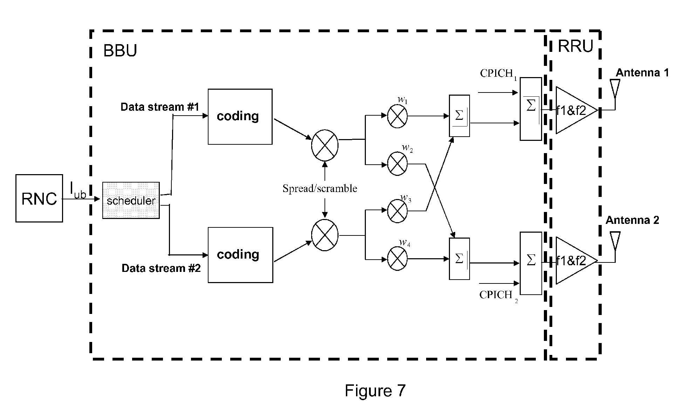

This solution is similar to solution (C) described above, shown in Figure 4, with the difference that instead of using the same frequency in both antennas, each antenna now transmits MIMO on a number of different frequency carriers (see **Figure 7**). Instead of having two independent MIMO dual streams on each of the carrier, the same two streams are transmitted on the different carriers (instead e.g. of having 4 data streams i.e. 2 per carrier)

In this way, a MIMO with space-coding and frequency diversity is obtained, with a gain higher than the gain in MIMO with space-coding diversity only (shown in Figure 4), so there is less power consumption needed or improved coverage compared to case (C) above (see Figure 5).

The frequency plus space-time/coding diversity provides a higher gain than using only a space-time/coding because the fast fading between the different frequency carriers as well as the instantaneous interference and load on each of the carrier are typically uncorrelated, so the overall transmit diversity gain achieved is higher.

This is achieved by configuring the user in MIMO transmission mode on each of the carriers used in the multicarrier transmission. The same stream of data is transmitted with MIMO across the carriers (i.e. single stream MIMO transmission).

This solution does not require any change in the 3GPP standards. This solution would be supported by UE supporting simultaneous operation of multicarrier HSDPA as well as MIMO. The solution has no impact in terms of Node B hardware and could be implemented as a software upgrade in the radio access network.

Transmission diversity over two or more carrier frequencies provides the following advantages:
- Frequency diversity gain: The diversity scheme refers to a method for improving the reliability of a message signal by using two or more communication channels with different characteristics. Diversity plays an important role in combating fading and avoiding error bursts. It is based on the fact that individual channels experience different levels of fading and interference. Multiple versions of the same signal may be transmitted and/or received and combined in the receiver. Diversity techniques may exploit the multipath propagation, resulting in a diversity gain, often measured in decibels. In this proposal there is an additional frequency diversity gain, so that the signal is transferred using several frequency channels, each version of this signal is affected in different manner in terms of fast fading, getting in average a diversity gain when combining the signals received from the different diversity channels.
- Better traffic load management: Same data is sent through two or more frequencies, so load management could be done as a pool without having to perform a per carrier management. This allows to achieve a perfect power balancing between the carriers for all users operating in multicarrier mode.

It is important to remark that the difference of this solution with respect to Dual Carrier-HSDPA (DC-HSDPA) is that in this solution there is a transmission of the same data in different frequencies, whereas in DC-HSDPA information is different in each frequency.

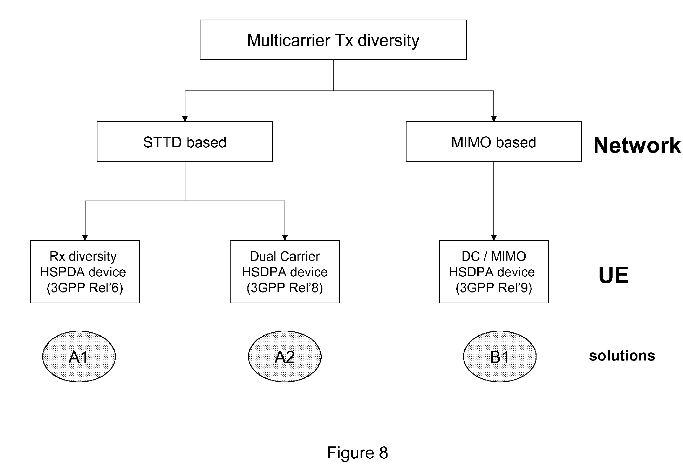

**Figure 8** recapitulates the different multicarrier Tx diversity solutions, according to the terminal point of view. From the terminal point of view, it is important to remark that UE categories as standardised by 3GPP could work with the different solutions without a software update for solutions A2 and B1 (shown in Figure 8), and with a software update for solution A1 (note that for solution B1 there could be also a software update for Rel'8 UE) as currently there are two receivers in the UEs, both of them listening to the same frequency, and to work with this solution, they should be listening to different frequencies. From Rel'8 onwards UE are able to receive two contiguous carrier frequencies.

The present invention provides 2 techniques for the multicarrier transmission diversity:
I) Multicarrier space-time transmit diversity (called "STTD based" in Figure 8) and
II) Multicarrier dual stream MIMO dual carrier transmission (called "MIMO based" in Figure 8).

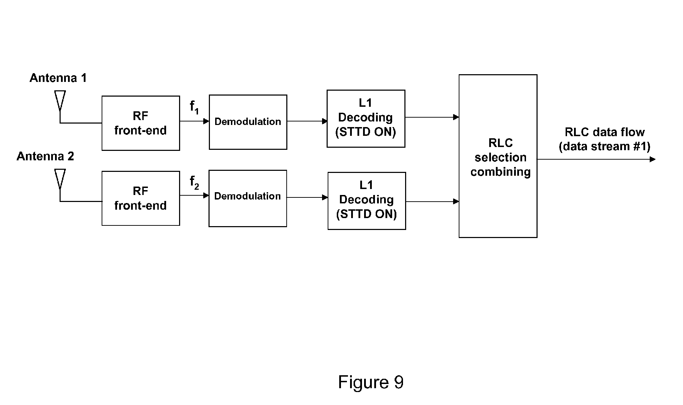

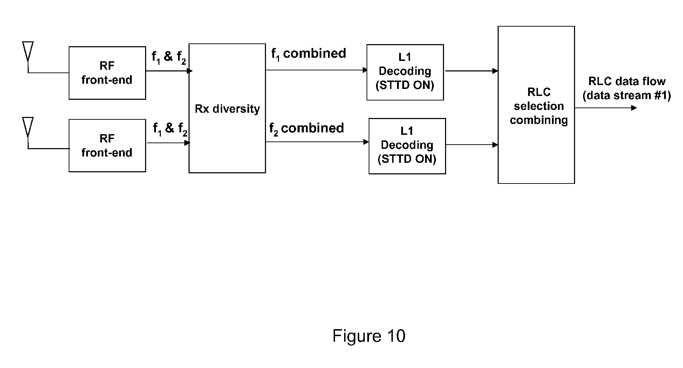

For the STTD based there are two options with the current legacy mobiles:
- Current HSPA data devices based on 3GPP Release 6 are only capable of receive diversity in the same frequency. That is named in Figure 8 as A1 solution. This solution in the UE side is explained in the **Figure 9****.** Basically the UE has 2 receivers. It is needed to tune the second receiver in f2 instead of f1. Then after the demodulation both branches are configured as STTD decoding and then, the RLC will select the packet with no errors as both will be duplicated due to the transmission diversity solution.
- A2 solution in UE side, shown in Figure 8, is used with terminals 3GPP release 8 or onwards. These devices are capable of MIMO and dual carrier. The **Figure 10** explains how it is implemented in the UE side. Both receivers are capable to receive in both frequencies. Then, Rx diversity is performed combining the 2 received branches on each of the carrier. Then every frequency signal is decoded with STTD activated and applied the RLC selection as in the previous case.

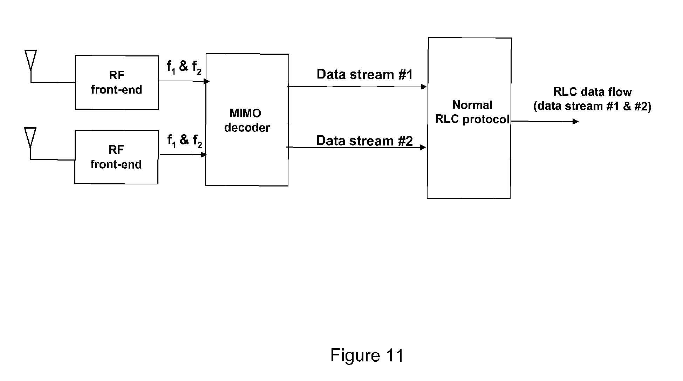

For MIMO based solution, there is one main option of implementation with the current legacy mobiles:
- B1 solution (Figure 8): UE based on 3GPP release 9. These mobiles are MIMO and Dual Carrier HSDPA capable, in other words these users are capable of receiving dual MIMO independently on each carrier. These mobiles have a 10 MHz bandwidth. At the receiver the two MIMO antennas receive the f1 and f2 and then in baseband decoder, the system is exactly the same as the normal MIMO. It is represented in **Figure 11**. The only needed part in a Release 9 mobile is that the two receivers are able to decode simultaneously two frequencies (10 MHz) each one configured with MIMO.

## Claims

1. Multicarrier transmit diversity in UTRAN for HSPA, comprising a baseband unit and a remote radio unit of a Node B configured for receiving at least one data stream from an RNC and subsequently generating a plurality N of encoded data streams and corresponding RF output signals for downlink transmission over N antennas;
**characterized in that** the remote radio unit is configured for transmitting the N RF output signals using transmission diversity over different carrier frequencies.

2. Multicarrier transmit diversity according to claim 1, wherein the baseband unit of the Node B is configured for receiving one data stream from the RNC and generating two STTD encoded data streams, and wherein the remote radio unit is configured for transmitting each STTD encoded data stream over M different frequency carriers.

3. Multicarrier transmit diversity according to claim 1, wherein the baseband unit of the Node B is configured for receiving one data stream from the RNC and generating two STTD encoded data streams, and wherein the remote radio unit is configured for transmitting one STTD encoded data stream over a frequency carrier at frequency f1 and the second STTD encoded data stream over a different frequency carrier, at frequency f2.

4. Multicarrier transmit diversity according to claim 1, wherein the baseband unit of the Node B is configured for receiving one data stream from the RNC and for transmitting, using MIMO baseband processing, the N MIMO data streams over M different frequency carriers.

5. Multicarrier transmit diversity according to claim 4, wherein M is 2, the first frequency carrier at frequency f1 and the second frequency carrier at frequency f2.

6. Multicarrier transmit diversity according to any of claims 1-5, wherein N is 2.

7. Multicarrier transmit diversity according to any of previous claims, comprising a plurality N of antennas for transmitting the N RF output signals.

8. Multicarrier receive diversity apparatus in mobile terminal for HSPA, comprising:
- a plurality of receivers, each one comprising:
• an antenna system for obtaining an RF signal;
• an RF front-end module;
• demodulation means;
• STTD decoding means;
• an RLC module for obtaining the data stream contained in the RF signal;
**characterized in that** the plurality of receivers are tuned at different frequencies.

9. Multicarrier receive diversity apparatus according to claim 8, comprising two RF receivers where signals are combined at RLC level.

10. Mobile terminal comprising the multicarrier receive diversity apparatus according to any of claims 8-9.

11. Multicarrier MIMO mobile terminal for HSPA, comprising:
- a plurality of receivers, each one comprising:
• an antenna system for obtaining an RF signal;
• an RF front-end module;
• demodulation means;
• MIMO decoder means to demodulate the single or dual streams;
**characterized in that** the plurality of receivers are tuned at M different frequencies each one.

12. Method for HSPA multicarrier transmission in UTRAN, comprising:
- receiving at a baseband unit of a Node B at least one data stream;
- obtaining a plurality N of encoded data streams;
- receiving at a remote radio unit of said Node B the N encoded data streams;
- transmitting N RF output signals;
**characterized in that** the N RF output signals are transmitted using TX diversity over different frequencies.

13. Method according to claim 12, comprising receiving one data stream from the RNC, generating two STTD encoded data streams and transmitting each STTD encoded data stream over M different frequency carriers.

14. Method according to claim 12, comprising receiving one data stream from the RNC, generating two STTD encoded data streams and transmitting one STTD encoded data stream over a frequency carrier at frequency f1 and the second STTD encoded data stream over a different frequency carrier, at frequency f2.

15. Method according to claim 10, comprising receiving one data stream from the RNC and transmitting, using MIMO baseband processing, the N MIMO data streams over M different frequency carriers.
